# EUROPÄISCHE PATENTSCHRIFT

(11) **EP 4 264 190 B1**
(45) Veröffentlichungstag und Bekanntmachung des Hinweises auf die Patenterteilung: **04.06.2025**
(21) Anmeldenummer: 21834724.3
(22) Anmeldetag: 07.12.2021
(51) Int. Cl.: G01D 11/24, G01D 11/02, G01D 5/14

(54) **HÖHENSTANDSSENSOR MIT EINEM RASTMITTEL AUFWEISENDEN LAGER**
VERTICAL POSITION SENSOR WITH A BEARING HAVING LATCHING MEANS
CAPTEUR DE POSITION VERTICALE AVEC PALIER COMPORTANT DES MOYENS DE VERROUILLAGE

(30) Priorität: 18.12.2020 DE 102020216342
(43) Veröffentlichungstag der Anmeldung: 25.10.2023
(73) Patentinhaber: Continental Automotive Technologies GmbH, 30175 Hannover (DE)
(72) Erfinder: BRÜGGEMANN, Stephan, 60488 Frankfurt am Main (DE); ECKRICH, Jörg, 60488 Frankfurt am Main (DE); KROHN, Thomas, 60488 Frankfurt am Main (DE)
(74) Vertreter: Continental Corporation
(86) Internationale Anmeldenummer: PCT/DE2021/200248
(87) Internationale Veröffentlichungsnummer: WO 2022/128018

(56) Entgegenhaltungen:
- DE-A1- 102012 106 021
- DE-A1- 102019 200 029
- DE-B3- 102011 118 775
- DE-C1- 19 733 719

## Beschreibung

Die Erfindung betrifft einen Sensor gemäß Oberbegriff von Anspruch 1.

In der DE 10 2019 200 029 A1, der DE 197 33 719 C1, der DE 10 2011 118 775 B3 und der DE 10 2012 106 021 A1 sind Sensoranordnungen mit jeweils einem Hebelarm gezeugt, der rotatorisch auslenkbar in einem Gehäuse oder einer Basiseinheit gelagert ist.

Der Erfindung liegt die Aufgabe zu Grunde, einen Sensor, umfassend eine Basiseinheit und eine Hebeleinheit vorzuschlagen, wobei der Sensor relativ kostengünstig und/oder robust und/oder kompakt und/oder präzise messend ausgebildet ist.

Diese Aufgabe wird erfindungsgemäß gelöst durch den Sensor gemäß Anspruch 1.

Die Erfindung betrifft einen Sensor, welcher eine Hebeleinheit aufweist, welche rotatorisch auslenkbar in einem Lager einer Basiseinheit gelagert ist, wobei die Hebeleinheit einen Schaft aufweist, welcher in dem Lager mit seinem Schaftlagerabschnitt gelagert ist, sowie einen mit diesem Schaft verbundenen Hebel, wobei der Schaft einen Encoder aufweist und wobei die Basiseinheit zumindest ein Sensorelement aufweist, welches den Encoder bzw. das durch diesen erzeugte und/oder modulierte Magnetfeld erfasst, wobei das Lager der Basiseinheit mehrere Rastmittel aufweist, insbesondere Rasthaken und/oder Rastvorsprünge, welche umlaufend auf dem Innenmantel des Lagers angeordnet sind und einstückig mit dem Lager ausgebildet sind und wobei diese Rastmittel direkt oder indirekt den Schaftlagerabschnitt halten und/oder führen. Auf dem Innenmantel des Lagers sind umlaufend je zwei voneinander beabstandete Reihen Rastmitteln, einstückig mit dem Lager ausgebildet, angeordnet. Der Schaftlagerabschnitt der Hebeleinheit weist eine Nut auf, in welche ein Sprengring angeordnet ist, welcher so ausgebildet ist, dass er lagerseitig im Wesentlichen formschlüssig durch die Rastmittel bzw. beiden Reihen an Rastmitteln aufgenommen werden kann bzw. aufgenommen wird bzw. gelagert wird.

Unter einem indirekten Halten und/oder Führen des Schaftlagerabschnitts durch die Rastmittel wird vorzugsweise verstanden, dass ein Sprengring oder ein anderes Verbindungsmittel, welches einen gegenseitigen Formschluss zwischen Lager und Schaftlagerabschnitt bildet bzw. ermöglicht, mittels der Rastmittel gehalten und/oder geführt und/oder gelagert wird.

Das Lager der Basiseinheit ist zweckmäßigerweise im Wesentlichen topfförmig bzw. hohlzylindrisch ausgebildet.

Der Sensor ist vorzugsweise als Winkelsensor ausgebildet, zur Messung eines Verdrehwinkels zwischen Hebeleinheit und Basiseinheit.

Zweckmäßigerweise ist der Sensor als Chassis Positionssensor ausgebildet, zur Erfassung der relativen Auslenkung und/oder Position zwischen einem Fahrzeugchassis und einer Fahrwerkseinheit mittels einer Winkelmessung des Sensors. Dafür weist der Sensor insbesondere eine Hebeleinheit auf, welche rotatorisch auslenkbar in einem Lager einer Basiseinheit gelagert ist, wobei die Hebeleinheit einen Schaft aufweist, welcher in dem Lager mit seinem Schaftlagerabschnitt gelagert ist, sowie einen besonders bevorzugt im Wesentlichen rechtwinklig zu diesem Schaft angeordneten Hebel.

Es ist bevorzugt, dass die Hebeleinheit im Wesentlichen, mit Ausnahme des Encoders, einstückig aus Kunststoff ausgebildet ist und dass ein Gehäuse der Basiseinheit, in welchem zumindest das Sensorelement angeordnet ist, gemeinsam mit dem Lager der Basiseinheit einstückig aus Kunststoff ausgebildet ist.

Die vorzugsweise im Wesentlichen einstückige Hebeleinheit, mit Ausnahme des Encoders, weist bevorzugt außerdem ein einstückig mit dem Hebel der Hebeleinheit verbundenes Verbindungselement zur Kopplung mit einer Kraftfahrzeugkomponente auf.

Vorzugsweise ist der Schaftlagerabschnitt, insbesondere die gesamte Hebeleinheit, aus kohlefaserverstärktem und/oder glasfaserverstärktem Kunststoff ausgebildet. Die Hebeleinheit sowie die Basiseinheit sind zweckmäßigerweise aus PBT ausgebildet bzw. das jeweilige Gehäuse. Diese Gehäuse sind jeweils einstückig ausgebildet und sind in einem Spritzgussvorgang ausgebildet.

Zweckmäßigerweise ist entweder der Schaftlagerabschnitt und dabei insbesondere die gesamte Hebeleinheit, aus kohlefaserverstärktem Kunststoff ausgebildet und das Lager der Basiseinheit, insbesondere das Lager und das Gehäuse der Basiseinheit gemeinsam, aus glasfaserverstärktem Kunststoff ausgebildet, oder alternativ vorzugsweise ist der Schaftlagerabschnitt und dabei insbesondere die gesamte Hebeleinheit, aus glasfaserverstärktem Kunststoff ausgebildet und das Lager der Basiseinheit, insbesondere das Lager und das Gehäuse der Basiseinheit gemeinsam, aus kohlefaserverstärktem Kunststoff ausgebildet. Insbesondere sind nicht beide Einheiten zugleich aus kohlefaserverstärktem Kunststoff, weil dies möglicherweise zu einer elektrischen Kopplung durch die gleiche Materialwahl führen könnten.

Unter einem Encoder wird bevorzugt ein Permanentmagnet verstanden, welcher insbesondere im Wesentlichen zylinderförmig ausgebildet ist und bezüglich des Schafts im Wesentlichen in radialer Richtung magnetisiert ist, besonders bevorzugt diametral magnetisiert ist. Alternativ vorzugsweise ist der Encoder als nicht permanentmagnetisches, ferromagnetisches Target ausgebildet.

Unter dem Sensorelement wird bevorzugt ein Magnetfeldsensorelement, insbesondere ein Hallelement oder ein magnetoresistives Magnetfeldsensorelement verstanden. Alternativ vorzugsweise weist das Sensorelement wenigstens eine bestromte Leiterschleife auf und erfasst das durch den Encoder modulierte Magnetfeld bzw. eine durch den Encoder induzierte elektrische Spannung in der Leiterschleife. Insbesondere weist das Sensorelement wenigstens eine Erzeugerleiterschleife zur Erzeugung eines Magnetfeldes auf und ein oder zwei Empfängerleiterschleifen, in welchen die resultierende induzierte elektrische Spannung, in Abhängigkeit des durch die Erzeugerleiterschleife und den Encoder resultierenden Magnetfelds, erfasst wird.

Das Sensorelement erfasst zweckmäßigerweise das Magnetfeld des Encoders bzw. das von dem Encoder modulierte Magnetfeld.

Bevorzugt ist das Lager der Basiseinheit, insbesondere die gesamte Basiseinheit, aus glasfaserverstärktem Kunststoff ausgebildet.

Durch die bevorzugte Ausbildung des Schaftlagerabschnitts und/oder des Lagers aus kohlefaserverstärktem Kunststoff wird eine Verringerung der Oberflächenreibung zwischen Schaftlagerabschnitt und Lager durch den Abrieb aus Kunststoff bzw. Kohlefasern erreicht.

Insbesondere ist der Sensor so ausgebildet, dass im Lager bzw. an dem Schaftlagerabschnitt kein Fett bzw. kein zusätzliches Schmiermittel eingebracht ist. Alternativ vorzugweise weist das Lager der Basiseinheit bzw. der Schaftlagerabschnitt ein zusätzliches Schmiermittel bzw. Fett auf.

Bevorzugt sind die Rastmittel als Rasthaken und/oder Rastvorsprünge und/oder Rastnasen ausgebildet.

Es ist bevorzugt, dass die beiden Reihen Rastmittel im Wesentlichen parallel zueinander ausgebildet. Besonders bevorzugt bilden diese beiden Reihen Rastmittel eine Nut, ganz besonders bevorzugt eine unterbrochene Nut, auf dem Innenmantel des Lagers aus, wobei diese Nut ganz besonders zweckmäßig nicht in den Innenmantel des Lagers hineinragt sondern ausschließlich durch die beiden Reihen an, insbesondere hervorstehenden, Rastmitteln gebildet wird.

Der Sprengring ist bevorzugt im Wesentlichen rund/kreisrund oder alternativ vorzugsweise nicht kreisrund ausgebildet, sondern im Wesentlichen oval oder oval/rund und dabei wellenförmig ausgebildet. Der Ring ist dabei zweckmäßigerweise unterbrochen ausgebildet.

Es ist bevorzugt, dass die Rastmittel der wenigstens einen Reihe entlang der Umlaufrichtung bzw. des Innenumfangs bzw. der Umlauflinie bzw. einer Innenumfangslinie, auf dem Innenmantel des Lagers, jeweils eine geringere oder im Wesentlichen gleiche Breite aufweisen, als/wie die Abstände zu den direkt benachbarten Rastmitteln.

Es ist bevorzugt, dass die Rastmittel der wenigstens einen Reihe entlang der Umlaufrichtung bzw. des Innenumfangs bzw. der Umlauflinie bzw. einer Innenumfangslinie, auf dem Innenmantel des Lagers jeweils im Wesentlichen gleichmäßig beabstandet zu den jeweils benachbarten Rastmitteln ausgebildet und angeordnet sind, wobei die wenigstens eine Reihe an Rastmitteln oder jeweils beide voneinander beabstandeten Reihen von Rastmitteln, jeweils besonders bevorzugt sechs Rastmittel aufweisen.

Es ist zweckmäßig, dass am Ende des Schafts, auf der dem Hebel abgewandten Seite, der Encoder angeordnet ist, wobei dieser Encoder durch den Kunststoffköper des Schafts ausschließlich formschlüssig gehalten wird und wird insbesondere seitlich umgriffen, besonders bevorzugt an seinem vollen Umfang. Dafür weist der Schaft besonders bevorzugt zwei oder drei oder mehrere Finger bzw. Vorsprünge auf, die den Encoder seitlich, insbesondere hinsichtlich der vollen Höhe bzw. axialen Ausdehnung des Encoders, formschlüssig fixieren, wobei ganz besonders bevorzugt keiner dieser Finger bzw. Vorsprünge den Encoder von unten abstützt. Zweckmäßigerweise ist der Encoder nicht mittels einer Klebung mit dem Schaft verbunden.

Es ist bevorzugt, dass das Gehäuse der Basiseinheit wenigstens zwei Befestigungsmittel aufweist, welche jeweils ein Gewinde oder eine im Wesentlichen sternförmige Ausnehmung umfassen, wobei die Befestigungsmittel ausgebildet sind, dass eine Schraube in das Material des entsprechenden Befestigungsmittels eingedreht werden kann, indem es zumindest teilweise in das Material dieses Befestigungsmittels hineinschneidet.. Die Befestigungsmittel sind insbesondere aus Kunststoff und einstückig mit dem Gehäuse der Basiseinheit verbunden bzw. gemeinsam einstückig aus Kunststoff ausgebildet. Alternativ vorzugsweise ist eines des beiden Befestigungsmittel als formschlüssig in eine Ausnehmung einer Kraftfahrzeugkomponente einsteckbares Element ausgebildet, welches nicht verschraubt wird und insbesondere eine Einstecknase bzw. einsteckbare Positionierhilfe, beispielsweise als Dorn ausgebildet, welcher eine beispielhaft sternförmige bzw. mehreckige Umfangsform bzw. ein derartiges Profil aufweist.

Das Gehäuse der Basiseinheit weist vorzugsweise wenigstens zwei Ausnehmungen auf, welche im Zuge der Ausbildung des Gehäuses erzeugt werden und welche jeweils einen Teil des Sensorelements und/oder eines Signalverarbeitungselements freistellen. Insbesondere ist im Bereich um diese Ausnehmungen, insbesondere mindestens 1mm um diese Ausnehmungen, bzw. die gesamte Oberfläche an die die Ausnehmung angrenzt, der umspritzte Teil des Gehäuses des Sensorelements und/oder des Gehäuses des Signalverarbeitungselements laseraktiviert, insbesondere vor dem Umspritzen. Hierdurch wird insbesondere die Haftung bzw. Dichtigkeit zwischen dem Gehäuse und dem Sensorelement bzw. dem Signalverarbeitungselement erhöht.

Es ist bevorzugt, dass der Schaft der Hebeleinheit einen Kragen aufweist, welcher so ausgebildet ist, dass er eine umlaufende Kante bzw. einen umlaufenden oberen Rand des im Wesentlichen hohlzylinderförmigen Lagers umgreift und sich axial auf diesem abstützt. Insbesondere ist der Kragen und die umlaufende obere Kante des Lagers so ausgebildet, dass der Kragen mit/ an der Kante einrasten bzw. sich formschlüssig fixieren/ verbinden kann. Besonders bevorzugt weist das Lager an seinem Außenmantel unterhalb der oberen Kante eine Nut auf, in welche beispielsweise ein Schmiermittel bzw. Fett eingebracht ist und in welche ganz besonders bevorzugt eine ringförmige Dichtung eingebracht ist, wodurch der Kragen der Hebeleinheit gegenüber dem Lager abgedichtet wird.

Zweckmäßigerweise weist die Hebeleinheit am Übergang zwischen Hebel und Schaft den Kragen auf.

Bevorzugt ist der Sensor als Winkelsensor und/oder Höhenstandssensor und/oder Chassis-Positionssensor ausgebildet.

Der Schaft weist bevorzugt eine im Wesentlichen zentrische Ausnehmung auf, welche sich von der Seite des Hebels als Sackloch in Richtung der Basiseinheit erstreckt, wobei insbesondere diese zentrische Ausnehmung zumindest in Teilen zylinderförmig und/oder trichterförmig und/oder sich verjüngend ausgebildet ist.

Die Basiseinheit umfasst zweckmäßigerweise ein Sensorelement und ein Signalverarbeitungselement, welche jeweils mit einem Leadframe elektrisch kontaktiert sind und an diesem befestigt sind. Der Leadframe ragt insbesondere mit zwei parallelen Anschlussbereichen in einen Stecker hinein. Der Stecker ist zweckmäßigerweise Teil des Gehäuses der Basiseinheit und das Sensorelement, das Signalverarbeitungselement sowie ein Teil des Leadframes sind in das Gehäuse eingebettet bzw. zumindest teilweise eingebettet bzw. das Gehäuse wird im Zuge des Umspritzens dieser Elemente und eines Teils des Leadframes in einem einzigen Spritzgussvorgang ausgebildet, wobei besonders bevorzugt gleichzeitig als Teil des Gehäuses das Lager, der Stecker sowie die Befestigungsmittel ausgebildet werden.

Bevorzugt weist das Gehäuse der Basiseinheit wenigstens zwei oder drei Ausnehmungen auf, welche im Zuge der Ausbildung des Gehäuses erzeugt werden und welche jeweils einen Teil des Sensorelements bzw. des Signalverarbeitungselements freistellen, insbesondere ist das Sensorelement bzw. das integrierte Sensor-und Signalverarbeitungselement von zwei gegenüberliegenden Ausnehmungen freigestellt. Im Bereich um diese Ausnehmungen ist der umspritzte Teil des Gehäuses des Sensorelements bzw. des Signalverarbeitungselements, also jeweils des eigenen Gehäuses dieser Elemente, laseraktiviert, insbesondere vor dem Umspritzen. Außerdem weist das Gehäuse der Basiseinheit besonders bevorzugt zusätzliche, zweckmäßigerweise zwei, Zentrierausnehmungen auf.

Das Sensorelement und das Signalverarbeitungselement sind zweckmäßigerweise integriert als ein Bauelement ausgebildet.

### Bezugszeichen

1 Hebeleinheit
11 Schaft
12 Hebel
13 Schaftlagerabschnitt
14 Encoder
15 Mittel zum seitlichen Umgreifen des Encoders
16 Kragen der Hebeleinheit
17 Nut
18 Sprengring
19 im Wesentlichen zentrische Ausnehmung
2 Basiseinheit
21 Lager
22 Sensoreinheit
23 Rastmittel
24 Befestigungsmittel Gehäuse Basiseinheit
25 Signalverarbeitungselement
26 umlaufende Kante des Lagers
27 Leadframe
28 Stecker
29 Ausnehmungen Gehäuse Basiseinheit
30 Nut im Außenmantel unterhalb der oberen Kante des Lagers der Basiseinheit

Es zeigen in schematischer Darstellung
- Fig. 1: ein Ausführungsbeispiel des Sensors,
- Fig. 2: eine beispielhafte Hebeleinheit,
- Fig. 3: eine beispielhafte Basiseinheit
- Fig. 4: den beispielhaften Sensor aus Fig. 1 in einem Schnitt, und
- Fig. 5: Ausführungsbespiel des Lagers und des dort gelagerten Schaftlagerabschnitts in einem Schnitt.

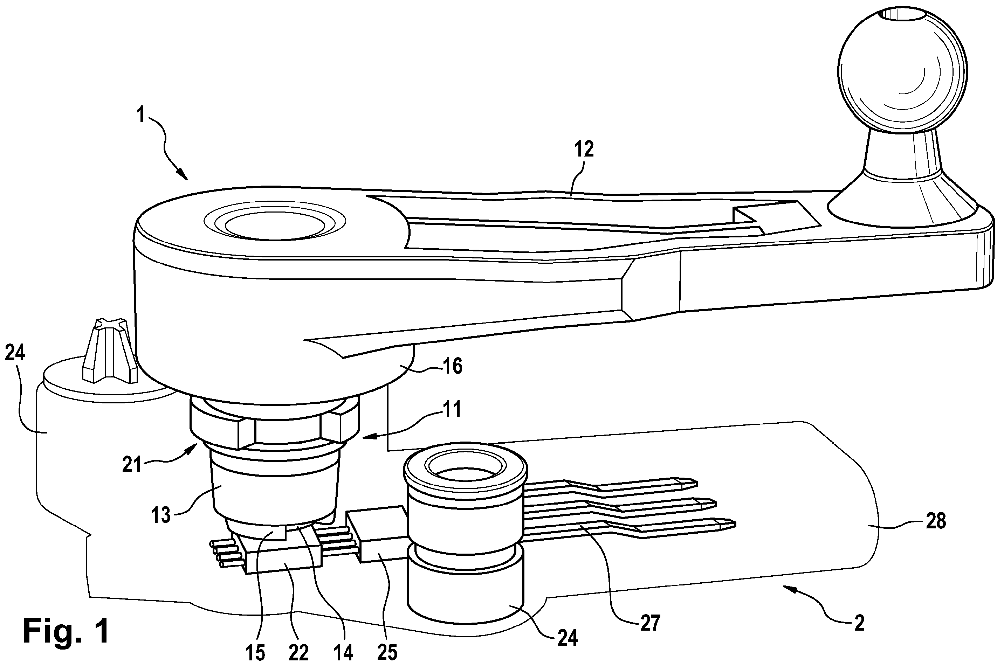

Fig. 1 zeigt ein Ausführungsbeispiel des Sensors. Der Sensor umfasst dabei eine Hebeleinheit 1 und eine Basiseinheit 2. Hebeleinheit besteht aus einem Hebel 12, an welchem ein Schaft 11 mit einem Schaftlageranschnitt 13 angeordnet ist, wobei der Schaftlagerabschnitt 13 in Lager 21 der Basiseinheit eingesteckt und gelagert ist. Am unteren Ende, des Schaftlagerabschnitts 13 ist ein Encoder 14 angeordnet, welcher von beispielhaften Vorsprüngen bzw. Fingern 15 des Schaftlagerabschnitts ausschließlich formschlüssig gehalten wird. Diese Vorsprünge 15 umgreifen ihn jeweils seitlich auf voller Höhe, allerdings untergreifen bzw. umschließen sie Encoder 14 nicht. Am Übergang zwischen Hebel 12 und Schaft 11 weist Hebeleinheit 1 einen Kragen 16 auf, welche die obere umlaufende Kante des Lagers 21 der Basiseinheit 2 umgreift. Hebeleinheit 1 ist bis auf Encoder 14 beispielgemäß einstückig aus kohlefaserverstärktem Kunststoff ausgebildet, unzwar in einem einzigen Spritzgussvorgang.

Zumindest das Gehäuse der Basiseinheit 2, in welchem das Sensorelement 22, das Signalverarbeitungselement 25, beide mit Leadframe 27 kontaktiert und befestigt angeordnet sind, und an welchem die Befestigungsmittel 24 angebracht sind sowie das Lager 21 des Basiselements sind beispielhaft gemeinsam einstückig aus glasfaserverstärktem Kunststoff ausgebildet, unzwar in einem einzigen Spritzgussvorgang. Das Gehäuse der Basiseinheit 2 bildet außerdem mit dem Leadframe als Kontakten einen Stecker 28 aus.

Eines der Befestigungsmittel 24 der Basiseinheit, im Vordergrund in Fig. 1 weist eine eingespritzte Hülse aus Metall zur Verschraubung des Sensors mit einer nicht dargestellten Fahrzeugkomponente auf. Das hintere Befestigungsmittel 24 ist beispielhaft als Dorn mit sternförmigem Profil zum Einstecken in eine Aufnahme der nicht dargestellten Fahrzeugkomponente ausgebildet. Lager 21 des Basiselements weist Rastmittel 23 auf, mit welcher die Schaftlagereinheit geführt bzw. gelagert wird, beispielshaft indirekt mittels eines Sprengrings.

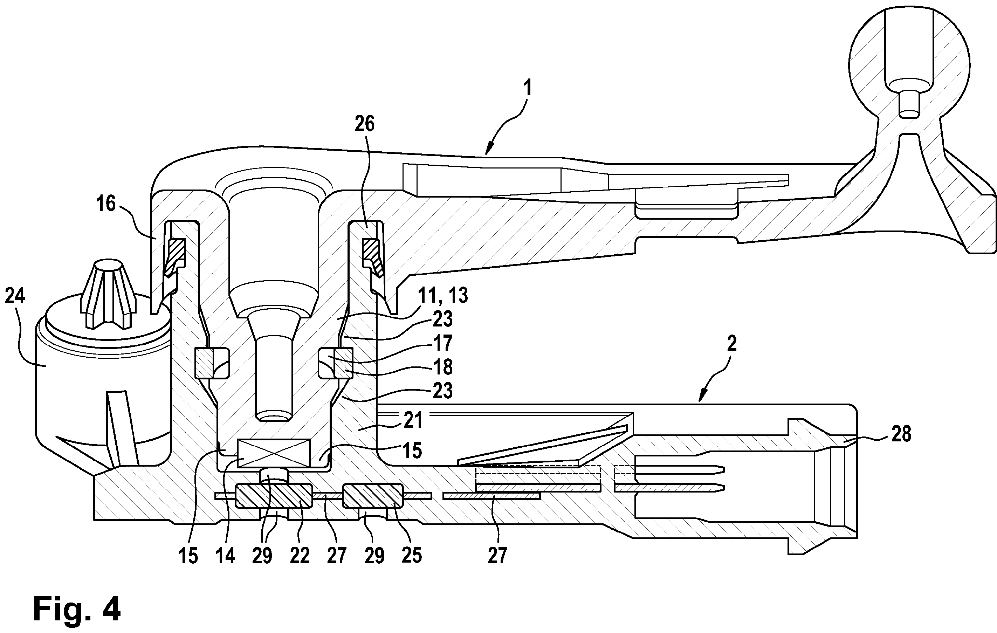

Anhand Fig. 4 ist das Ausführungsbeispiel aus Fig. 1 in einem Schnitt veranschaulicht, wobei Sprengring 18, seitens der Hebeleinheit 1 in einer Nut 17 der Schaftlagereinheit 13 gelagert ist und der Sprengring 18 dabei ebenfalls von den Rastmitteln 23 des Lagers 21 der Basiseinheit 2 geführt bzw. gelagert ist. Rastmittel 23 sind dabei einstückig mit dem Lager 21 verbunden und auf dessen Innenmantel umlaufend entlang einer Innenumfangslinie angeordnet bzw. beispielhaft auf im Wesentlichen zwei zueinander parallelen Innenumfangslinien, wodurch die Rastmittel 23 eine unterbrochene Nut auf dem Innenmantel des Lagers 21 ausbilden.

Das Gehäuse der Basiseinheit 2 weist drei Ausnehmungen 29 auf, welche im Zuge der Ausbildung des Gehäuses erzeugt werden und welche beidseitig einen Teil des Sensorelements 22 freistellen und des Signalverarbeitungselements 25 einseitig freistellen. Im Bereich um diese Ausnehmungen 29 ist der umspritzte Teil des Gehäuses des Sensorelements 22 bzw. des Signalverarbeitungselements 25 laseraktiviert, also jeweils des eigenen Gehäuses dieser Elemente, wodurch eine dichte Verbindung zwischen den Elementgehäusen und dem Gehäuse der Basiseinheit 2 sichergestellt wird. Der Kragen 16 der Hebeleinheit 1 umgreift die umlaufende obere Kante 26 des Lagers 21. Encoder 14 ist am unteren Ende des Schaftes 11 angeordnet und wird durch seitliches Umgreifen ausschließlich formschlüssig gehalten, wobei einer der Vorsprünge 15 bzw. Finger des Schafts veranschaulicht ist in diesem Schnitt.

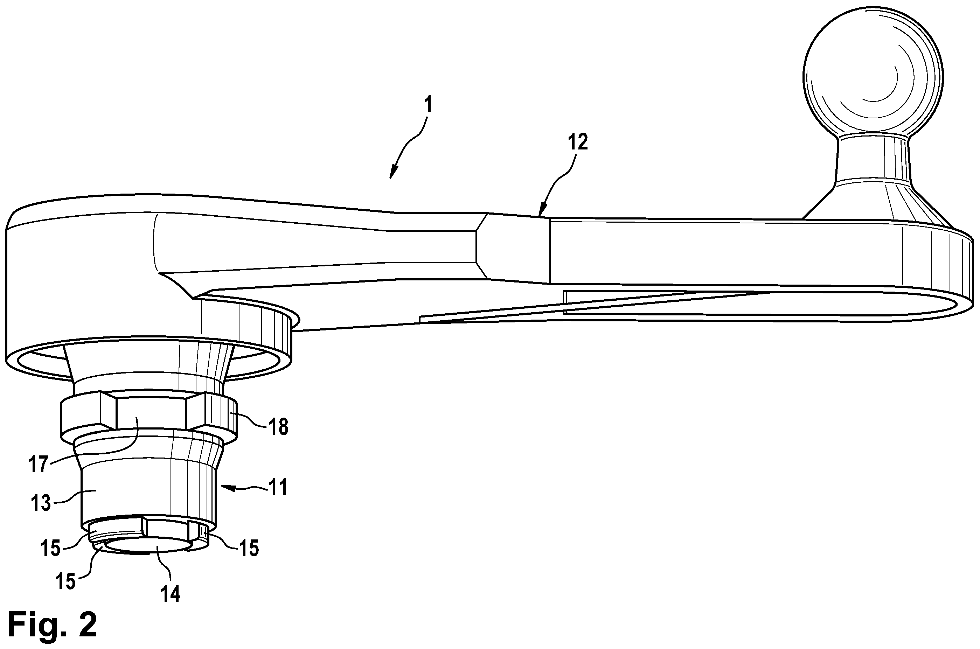

Fig. 2 zeigt beispielhafte Hebeleinheit 1 mit Hebel 12, welcher im Wesentlichen rechtwinklig zu Schaft 11 ausgebildet ist. Schaft 11 umfasst Schaftlagerabschnitt 13, welcher in das nicht dargestellte Lager der Basiseinheit einfügbar und dort rotatorisch beweglich gelagert wird. Schaftlagerabschnitt 13 weist eine umlaufende Nut 17 auf, mit welcher Sprengring 18 verbindbar ist bzw. in diese Nut eingreift bzw. eintaucht. Am unteren bzw. dem Hebel abgewandten Ende des Schaftes 11 ist Encoder 14 mittels der jeweils seitlich den Encoder 14 greifenden Vorsprünge bzw. Finger 15, welche Encoder 14 ausschließlich formschlüssig halten und fixieren. Die Vorsprünge bzw. Finger 15 stehen dabei von Schaft 11 nach unten im Wesentlichen so weit ab, wie die Höhe des Encoders 14 in diese Richtung.

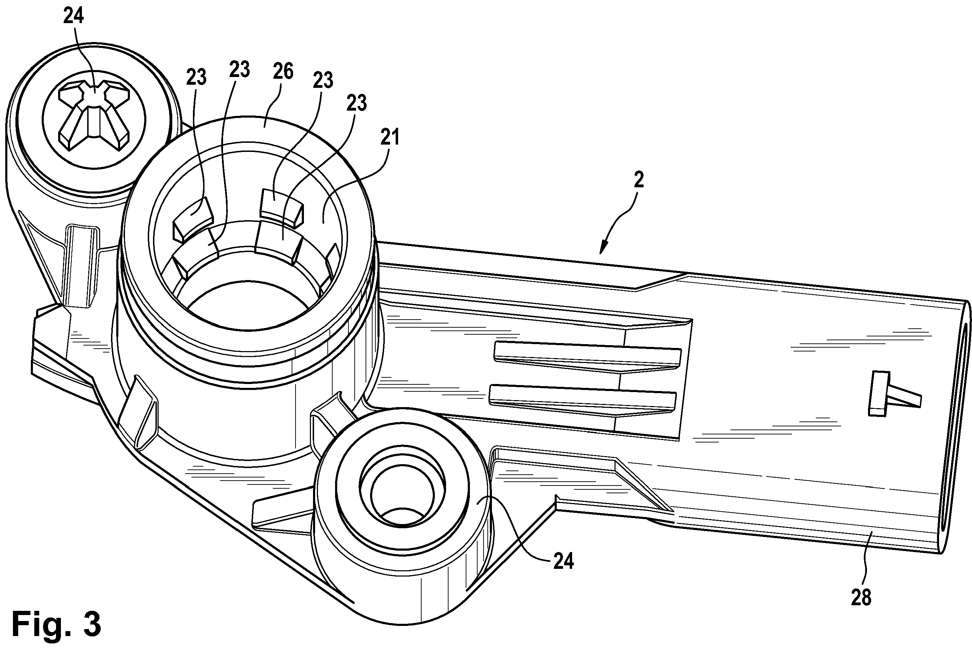

Anhand der Fig. 3 ist die Basiseinheit 2 bespielhaft veranschaulicht, welche ein Lager 21, aufweist, zwei Befestigungsmittel 24 der Basiseinheit sowie Stecker 28. Lager 21 ist im Wesentlichen topfförmig bzw. hohlzylindrisch ausgebildet und weist auf seinem Innenmantel zwei im Wesentlichen zueinander parallele Reihen von Rastnasen als Rastmittel 23 auf, welche gemeinsam eine unterbrochene Nut auf dem Innenmantel des Lagers 21 formen, zur Aufnahme bzw. Lagerung bzw. Führung des nicht dargestellten Sprengrings, welcher seinerseits mit dem nichtdargestellten Schaftlagerabschnitt der Hebeleinheit in Eingriff steht.

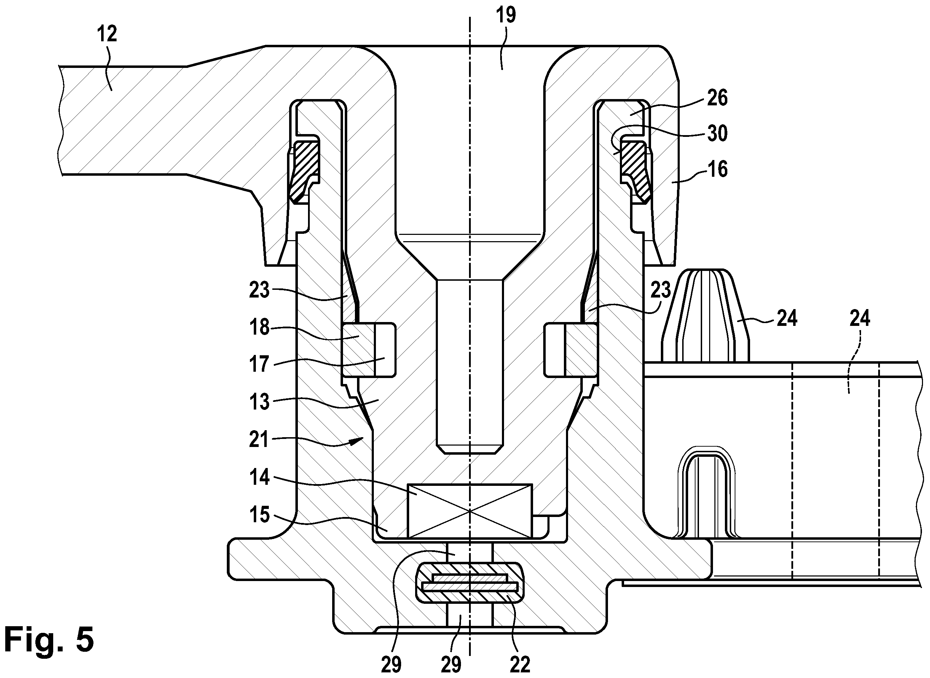

Fig. 5 zeigt beispielhaft einen Schnitt durch das Lager 21 der Basiseinheit und dem dort gelagerten Schaftlagerabschnitt 13 der Hebeleinheit. Der Schaft weist bevorzugt eine im Wesentlichen zentrische Ausnehmung 19 auf, welche sich von der Seite des Hebels 12 als Sackloch in Richtung der Basiseinheit verjüngend erstreckt.

Der Schaft der Hebeleinheit weist außerdem Kragen 16 auf, welcher so ausgebildet ist, dass er umlaufende Kante 26 bzw. einen umlaufenden oberen Rand des im Wesentlichen hohlzylinderförmigen Lagers21 umgreift und sich axial auf diesem abstützt. Dabei ist der Kragen 16 und die umlaufende obere Kante 26 des Lagers so ausgebildet, dass der Kragen mit/ an der Kante einrasten bzw. sich formschlüssig fixieren/ verbinden kann. Beispielgemäß weist das Lager 21 an seinem Außenmantel unterhalb der oberen Kante 26 eine Nut 30 auf, in welche beispielsweise ein Schmiermittel bzw. Fett eingebracht ist und in beispielhaft eine ringförmige Dichtung eingebracht ist, wodurch der Kragen 16 der Hebeleinheit gegenüber dem Lager 21 abgedichtet ist.

Auf dem Innenmantel des Lagers 21 sind umlaufend je zwei voneinander beabstandete Reihen Rastmitteln 23 hier zur Sichtbarmachung verschiedenartig schraffiert angeordnet, aber jeweils einstückig mit dem Lager ausgebildet, dabei sind diese beiden Reihen Rastmittel 23 beispielgemäß im Wesentlichen parallel zueinander ausgebildet und bilden gemeinsam eine unterbrochene Nut auf dem Innenmantel des Lagers 23 aus, wobei diese Nut nicht in den Innenmantel des Lagers hineinragt sondern ausschließlich durch die beiden Reihen an hervorstehenden Rastmitteln 23 gebildet wird. In diese unterbrochene Nut aus Rastmitteln 23 und deiner Nut 17 auf dem Schaftlagerabschnitt 13 taucht jeweils Sprengring 18 ein und verbindet Schaftlagerabschnitt 13 und Lager 21 formschlüssig.

Die Basiseinheit weist außerdem zwei Befestigungsmittel 24 auf.

Am Ende des Schafts, auf der dem Hebel 12 abgewandten Seite, ist der Encoder 14 angeordnet, wobei dieser Encoder 14 durch den Kunststoffköper des Schafts ausschließlich formschlüssig gehalten wird und seitlich umgriffen wird. Dafür weist der Schaft mehrere Finger bzw. Vorsprünge 15 auf, die den Encoder 14 seitlich, hinsichtlich dessen voller Höhe bzw. axialer Ausdehnung formschlüssig fixieren. Unter dem Encoder 14 bzw. diesem gegenüberliegend zugeordnet ist Sensorelement 22 im Gehäuse der Basiseinheit eingebettet und jeweils gegenüberliegend durch eine Ausnehmung 29 über und unter dem Sensorelement 22 freigestellt, wobei das Sensorelementgehäuse im Bereich um die Ausnehmung herum laseraktiviert bzw. laseraufgeraut ist, um eine dichte Verbindung zum Spritzgussgehäuse der Basiseinheit sicher zu stellen.

## Patentansprüche

1. Sensor, welcher eine Hebeleinheit (1) aufweist, welche rotatorisch auslenkbar in einem Lager (21) einer Basiseinheit (2) gelagert ist, wobei die Hebeleinheit (1) einen Schaft (11) aufweist, welcher in dem Lager (21) mit seinem Schaftlagerabschnitt (13) gelagert ist, sowie einen mit diesem Schaft (11) verbundenen Hebel (12), wobei der Schaft (11) einen Encoder (14) aufweist und wobei die Basiseinheit (2) zumindest ein Sensorelement (22) aufweist, welches den Encoder (14) erfasst,
wobei
das Lager (21) der Basiseinheit mehrere Rastmittel (23) aufweist, insbesondere Rasthaken und/oder Rastvorsprünge, welche umlaufend auf dem Innenmantel des Lagers (21) angeordnet sind und einstückig mit dem Lager ausgebildet sind und wobei diese Rastmittel (23) direkt oder indirekt den Schaftlagerabschnitt (13) halten und/oder führen, **dadurch gekennzeichnet, dass** auf dem Innenmantel des Lagers (21) umlaufend je zwei voneinander beabstandete Reihen Rastmitteln (23), einstückig mit dem Lager (21) ausgebildet, angeordnet sind, und dass der Schaftlagerabschnitt (13) der Hebeleinheit (1) eine Nut (17) aufweist, in welche ein Sprengring (18) angeordnet ist, welcher so ausgebildet ist, dass er lagerseitig im Wesentlichen formschlüssig durch die beiden Reihen an Rastmitteln aufgenommen wird.

2. Sensor nach Anspruch 1, **dadurch gekennzeichnet, dass** die Hebeleinheit (1) im Wesentlichen, mit Ausnahme des Encoders (14), einstückig aus Kunststoff ausgebildet ist und dass ein Gehäuse der Basiseinheit (2), in welchem zumindest das Sensorelement (22) angeordnet ist, gemeinsam mit dem Lager (21) der Basiseinheit (2) einstückig aus Kunststoff ausgebildet ist.

3. Sensor nach mindestens einem der vorhergehenden Ansprüche, **dadurch gekennzeichnet, dass** die beiden Reihen Rastmittel (23) im Wesentlichen parallel zueinander ausgebildet.

4. Sensor nach mindestens einem der vorhergehenden Ansprüche, **dadurch gekennzeichnet, dass** die Rastmittel (23) der wenigstens einen Reihe entlang der Umlaufrichtung/des Innenumfangs auf dem Innenmantel des Lagers, jeweils eine geringere Breite aufweisen, als die Abstände zu den direkt benachbarten Rastmitteln (23).

5. Sensor nach mindestens einem der vorhergehenden Ansprüche, **dadurch gekennzeichnet, dass** die Rastmittel (23) der wenigstens einen Reihe entlang der Umlaufrichtung/ des Innenumfangs auf dem Innenmantel des Lagers (21) jeweils im Wesentlichen gleichmäßig beabstandet zu den jeweils benachbarten Rastmitteln (23) ausgebildet und angeordnet sind, wobei die wenigstens eine Reihe an Rastmitteln (23) oder jeweils beide voneinander beabstandeten Reihen von Rastmitteln (23), jeweils insbesondere sechs Rastmittel aufweisen.

6. Sensor nach mindestens einem der vorhergehenden Ansprüche, **dadurch gekennzeichnet, dass** der Schaftlagerabschnitt (13), insbesondere die gesamte Hebeleinheit (1), aus kohlefaserverstärktem Kunststoff ausgebildet ist.

7. Sensor nach mindestens einem der vorhergehenden Ansprüche, **dadurch gekennzeichnet, dass** das Lager (21) der Basiseinheit (2) aus glasfaserverstärktem Kunststoff ausgebildet ist.

8. Sensor nach mindestens einem der vorhergehenden Ansprüche, **dadurch gekennzeichnet, dass** am Ende des Schafts (11), auf der dem Hebel (12) abgewandten Seite, der Encoder (14) angeordnet ist, wobei dieser Encoder (14) durch den Kunststoffköper des Schafts ausschließlich formschlüssig gehalten wird und wird insbesondere seitlich umgriffen, besonders bevorzugt an seinem vollen Umfang.

9. Sensor nach mindestens einem der vorhergehenden Ansprüche, **dadurch gekennzeichnet, dass** das Gehäuse der Basiseinheit (2) wenigstens zwei Befestigungsmittel (24) aufweist, welche jeweils ein Gewinde oder eine im Wesentlichen sternförmige Ausnehmung umfassen, wobei die Befestigungsmittel (24) ausgebildet sind, dass eine Schraube in das Material des entsprechenden Befestigungsmittels (24) eingedreht werden kann, indem es zumindest teilweise in das Material dieses Befestigungsmittels (24) hineinschneidet.

10. Sensor nach mindestens einem der vorhergehenden Ansprüche, **dadurch gekennzeichnet, dass** das Gehäuse der Basiseinheit (2) wenigstens zwei Ausnehmungen (29) aufweist, welche im Zuge der Ausbildung des Gehäuses erzeugt werden und welche jeweils einen Teil des Sensorelements (22) und/oder eines Signalverarbeitungselements (25) freistellen.

11. Sensor nach Anspruch 10, **dadurch gekennzeichnet, dass** im Bereich um diese Ausnehmungen (29) der umspritzte Teil des Gehäuses des Sensorelements (22) und/oder des Gehäuses des Signalverarbeitungselements (25) laseraktiviert ist, insbesondere vor dem Umspritzen.

12. Sensor nach mindestens einem der vorhergehenden Ansprüche, **dadurch gekennzeichnet, dass** der Schaft (11) der Hebeleinheit (1) einen Kragen (16) aufweist, welcher so ausgebildet ist, dass er eine umlaufende Kante (26) des im Wesentlichen hohlzylinderförmigen Lagers (21) umgreift und sich axial auf dieser abstützt.

13. Sensor nach mindestens einem der vorhergehenden Ansprüche, **dadurch gekennzeichnet, dass** der Sensor als Winkelsensor und/oder Höhenstandssensor und/oder Chassis-Positionssensor ausgebildet ist.

## Claims

1. Sensor which has a lever unit (1) which is rotationally deflectably mounted in a bearing (21) of a base unit (2), wherein the lever unit (1) has a shaft (11), which is mounted by way of its shaft bearing portion (13) in the bearing (21), and has a lever (12) connected to said shaft (11), wherein the shaft (11) has an encoder (14), and
wherein the base unit (2) has at least one sensor element (22) which detects the encoder (14),
wherein
the bearing (21) of the base unit has multiple detent means (23), in particular detent hooks and/or detent projections, which are arranged in encircling fashion on the inner shell of the bearing (21) and which are formed as a single piece with the bearing, and wherein said detent means (23) directly or indirectly hold and/or guide the shaft bearing portion (13), **characterized in that** in each case two mutually spaced-apart rows of detent means (23) are arranged in encircling fashion on the inner shell of the bearing (21) so as to be formed integrally with the bearing (21), and **in that** the shaft bearing portion (13) of the lever unit (1) has a groove (17) in which a snap ring (18) is arranged, which snap ring is configured such that, at the bearing side, it is received substantially in form-fitting fashion by the two rows of detent means.

2. Sensor according to Claim 1, **characterized in that** the lever unit (1) is formed substantially, with the exception of the encoder (14), as a single piece from plastics, and **in that** a housing of the base unit (2), in which at least the sensor element (22) is arranged, is formed as a single piece from plastics together with the bearing (21) of the base unit (2).

3. Sensor according to at least one of the preceding claims, **characterized in that** the two rows of detent means (23) are configured to be substantially parallel to one another.

4. Sensor according to at least one of the preceding claims, **characterized in that** the detent means (23) of the at least one row each have a width along the peripheral direction/the inner circumference, on the inner shell of the bearing, which is smaller than the spacings to the directly adjacent detent means (23).

5. Sensor according to at least one of the preceding claims, **characterized in that** the detent means (23) of the at least one row are each formed and arranged so as to be substantially uniformly spaced apart, along the peripheral direction/the inner circumference, on the inner shell of the bearing (21), from the respectively adjacent detent means (23), wherein the at least one row of detent means (23), or each of the two mutually spaced-apart rows of detent means (23), each have in particular six detent means.

6. Sensor according to at least one of the preceding claims, **characterized in that** the shaft bearing portion (13), in particular the entire lever unit (1), is formed from carbon-fibre-reinforced plastics.

7. Sensor according to at least one of the preceding claims, **characterized in that** the bearing (21) of the base unit (2) is formed from glass-fibre-reinforced plastics.

8. Sensor according to at least one of the preceding claims, **characterized in that** the encoder (14) is arranged at the end of the shaft (11) on the side averted from the lever (12), wherein said encoder (14) is held exclusively in form-fitting fashion, and is in particular engaged around laterally, particularly preferably over its full circumference, by the plastics body of the shaft.

9. Sensor according to at least one of the preceding claims, **characterized in that** the housing of the base unit (2) has at least two fastening means (24) which each comprise a thread or a substantially star-shaped recess, wherein the fastening means (24) are configured such that a screw can be screwed into the material of the corresponding fastening means (24) by virtue of said screw at least partially cutting into the material of said fastening means (24).

10. Sensor according to at least one of the preceding claims, **characterized in that** the housing of the base unit (2) has at least two recesses (29) which are generated during the production of the housing and which each expose a part of the sensor element (22) and/or of a signal processing element (25).

11. Sensor according to Claim 10, **characterized in that** the overmoulded part of the housing of the sensor element (22) and/or of the housing of the signal processing element (25) is laser-activated in the region around said recesses (29), in particular before the overmoulding process.

12. Sensor according to at least one of the preceding claims, **characterized in that** the shaft (11) of the lever unit (1) has a collar (16), which is configured to engage around, and be supported axially on, an encircling edge (26) of the substantially hollow cylindrical bearing (21).

13. Sensor according to at least one of the preceding claims, **characterized in that** the sensor is configured as an angle sensor and/or ride height sensor and/or chassis position sensor.

## Revendications

1. Capteur qui comporte une unité de levier (1) qui est montée de manière à pouvoir être déviée en rotation dans un palier (21) d'une unité de base (2), l'unité de levier (1) comportant un arbre (11) qui est monté dans le palier (21) par l'intermédiaire de sa partie de palier d'arbre (13) et un levier (12) relié à cet arbre (11), l'arbre (11) comportant un codeur (14) et
l'unité de base (2) comportant au moins un élément de capteur (22) qui détecte le codeur (14),
dans lequel
le palier (21) de l'unité de base présente une pluralité de moyens de verrouillage (23), en particulier des crochets de verrouillage et/ou des saillies de verrouillage, qui sont disposés tout autour de l'enveloppe interne du palier (21) et sont formés d'une seule pièce avec le palier, et ces moyens de verrouillage (23) maintiennent et/ou guident directement ou indirectement la partie de palier d'arbre (13),
**caractérisé en ce que** deux rangées de moyens de verrouillage (23), espacées l'une de l'autre et formées d'une seule pièce avec le palier (21), sont disposées tout autour de l'enveloppe interne du palier (21), et **en ce que** la partie de palier d'arbre (13) de l'unité de levier (1) présente une rainure (17) dans laquelle est disposé un anneau élastique (18) qui est conçu de telle sorte qu'il est reçu côté palier, sensiblement par complémentarité de forme, par les deux rangées de moyens de verrouillage.

2. Capteur selon la revendication 1, **caractérisé en ce que** l'unité de levier (1) est réalisée sensiblement d'une seule pièce en matière plastique, à l'exception du codeur (14), et **en ce qu'**un boîtier de l'unité de base (2), dans lequel est disposé au moins l'élément de capteur (22), est réalisé d'une seule pièce en matière plastique conjointement avec le palier (21) de l'unité de base (2).

3. Capteur selon au moins l'une des revendications précédentes, **caractérisé en ce que** les deux rangées de moyens de verrouillage (23) sont réalisées sensiblement parallèlement l'une à l'autre.

4. Capteur selon au moins l'une des revendications précédentes, **caractérisé en ce que** les moyens de verrouillage (23) de l'au moins une rangée présentent respectivement, le long de la direction circonférentielle/de la circonférence interne sur l'enveloppe interne du palier, une largeur inférieure aux distances par rapport aux moyens de verrouillage (23) directement voisins.

5. Capteur selon au moins l'une des revendications précédentes, **caractérisé en ce que** les moyens de verrouillage (23) de l'au moins une rangée sont respectivement réalisés et disposés le long de la direction circonférentielle/de la circonférence interne sur l'enveloppe interne du palier (21) de manière sensiblement uniformément espacée par rapport aux moyens de verrouillage (23) voisins, l'au moins une rangée de moyens de verrouillage (23) ou chacune des deux rangées espacées de moyens de verrouillage (23) comportant en particulier respectivement six moyens de verrouillage.

6. Capteur selon au moins l'une des revendications précédentes, **caractérisé en ce que** la partie de palier d'arbre (13), en particulier la totalité de l'unité de levier (1), est réalisée en matière plastique renforcée par des fibres de carbone.

7. Capteur selon au moins l'une des revendications précédentes, **caractérisé en ce que** le palier (21) de l'unité de base (2) est réalisé en matière plastique renforcée par des fibres de verre.

8. Capteur selon au moins l'une des revendications précédentes, **caractérisé en ce que** le codeur (14) est disposé à l'extrémité de l'arbre (11), du côté opposé au levier (12), ce codeur (14) étant maintenu exclusivement par complémentarité de forme par le corps en matière plastique de l'arbre et étant en particulier entouré latéralement, de manière particulièrement préférée sur toute sa circonférence.

9. Capteur selon au moins l'une des revendications précédentes, **caractérisé en ce que** le boîtier de l'unité de base (2) comporte au moins deux moyens de fixation (24) qui comprennent respectivement un filetage ou un évidement sensiblement en forme d'étoile, les moyens de fixation (24) étant conçus de telle sorte qu'une vis peut être vissée dans le matériau du moyen de fixation (24) correspondant en faisant en sorte qu'elle s'insère au moins partiellement dans le matériau de ce moyen de fixation (24).

10. Capteur selon au moins l'une des revendications précédentes, **caractérisé en ce que** le boîtier de l'unité de base (2) comporte au moins deux évidements (29) qui sont créés lors de la formation du boîtier et qui dégagent respectivement une partie de l'élément de capteur (22) et/ou d'un élément de traitement de signal (25).

11. Capteur selon la revendication 10, **caractérisé en ce que**, dans la zone entourant ces évidements (29), la partie surmoulée du boîtier de l'élément de capteur (22) et/ou du boîtier de l'élément de traitement de signal (25) est activée par laser, en particulier avant le surmoulage.

12. Capteur selon au moins l'une des revendications précédentes, **caractérisé en ce que** l'arbre (11) de l'unité de levier (1) comporte un collet (16) qui est conçu de telle sorte qu'il entoure un bord circonférentiel (26) du palier (21) sensiblement cylindrique creux et repose axialement sur celui-ci.

13. Capteur selon au moins l'une des revendications précédentes, **caractérisé en ce que** le capteur est réalisé sous forme de capteur d'angle et/ou de capteur de niveau et/ou de capteur de position de châssis.
